# EUROPEAN PATENT SPECIFICATION

(11) **EP 4 242 774 B1**
(45) Date of publication and mention of the grant of the patent: **25.09.2024**
(21) Application number: 23159440.9
(22) Date of filing: 01.03.2023
(51) Int. Cl.: G05D 1/00, B60W 50/02, B60W 60/00

(54) **VEHICLE AND MONITORING SYSTEM FOR VEHICLE**
FAHRZEUG UND ÜBERWACHUNGSSYSTEM FÜR EIN FAHRZEUG
VÉHICULE ET SYSTÈME DE SURVEILLANCE POUR VÉHICULE

(30) Priority: 09.03.2022 CN 202210225476
(43) Date of publication of application: 13.09.2023
(73) Proprietor: Beijing Tusen Zhitu Technology Co., Ltd., Beijing 100016 (CN)
(72) Inventor: PENG, Rui, Beijing, 100016 (CN); ZHANG, Yuda, Beijing, 100016 (CN); JI, Pingyuan, Beijing, 100016 (CN)
(74) Representative: Murgitroyd & Company

(56) References cited:
- US-A1- 2018 136 649
- US-A1- 2020 019 166
- US-A1- 2020 310 431
- US-A1- 2021 271 242
- US-A1- 2021 405 642

## Description

The present disclosure claims priority to Chinese Patent Application No. 202210225476.X, titled "MONITORING SYSTEM FOR VEHICLE AND VEHICLE", filed on March 9, 2022.

### TECHNICAL FIELD

The present disclosure involves the field of intelligent transportation, in particular the control and monitoring technology of autonomous driving, and specifically a vehicle and a monitoring system for the vehicle, a monitoring method, an electronic apparatus, a computer-readable storage medium, and a computer program product.

### BACKGROUND

In the field of autonomous driving, because an autonomous driving system depends on the sensor's perception and the calculation result of a decision algorithm, an autonomous vehicle may have security problems when there are shadow areas in the perception, false detection and missing detection of the perception and recognition algorithm, or failures of the autonomous driving system.
Reference US20200019166A1 relates to systems and methods enabling an autonomous vehicle to request assistance from a remote operator when the vehicle's confidence in operation is low. One example method includes operating an autonomous vehicle in a first autonomous mode. The method may also include identifying a situation where a level of confidence of an autonomous operation in the first autonomous mode is below a threshold level. The method may further include sending a request for assistance to a remote assistor, the request including sensor data representative of a portion of an environment of the autonomous vehicle. The method may additionally include receiving a response from the remote assistor, the response indicating a second autonomous mode of operation. The method may also include causing the autonomous vehicle to operate in the second autonomous mode of operation in accordance with the response from the remote assistor.

### SUMMARY

According to one aspect of the present disclosure, a monitoring system for a vehicle is provided, wherein the vehicle includes multiple driving modes, and the monitoring system includes: an instruction-generating device configured to generate a control instruction for triggering one of the multiple driving modes of the vehicle, and a communication device configured to send the control instruction to the vehicle so as to trigger the vehicle to travel according to the one of the multiple driving modes of the vehicle, wherein the vehicle comprises an autonomous driving system, the autonomous driving system comprising a first autonomous driving subsystem and a second autonomous driving subsystem, and the first autonomous driving subsystem and the second autonomous driving subsystem comprising different sensors, wherein the plurality of driving modes comprise at least one of the following driving modes: a first driving mode in which the first autonomous driving subsystem controls the vehicle to travel a first distance and then stop; a second driving mode in which the first autonomous driving subsystem controls the vehicle to travel a second distance and then stop; and a third driving mode in which the second autonomous driving subsystem controls the vehicle to travel a third distance and then stop, wherein the second distance is greater than the first distance and the third distance.

According to another aspect of the present disclosure, a vehicle with multiple driving modes is provided, including: a communication device configured to receive a control instruction, wherein the control instruction is used to trigger the vehicle to travel according to one of the multiple driving modes, a control device configured to control the vehicle to enter the one of the multiple driving modes according to the control instruction, a first autonomous driving subsystem, and a second autonomous driving subsystem, the first autonomous driving subsystem and the second autonomous driving subsystem comprising different sensors, wherein the plurality of driving modes comprise at least one of the following driving modes: a first driving mode in which the first autonomous driving subsystem controls the vehicle to travel a first distance and then stop; a second driving mode in which the first autonomous driving subsystem controls the vehicle to travel a second distance and then stop; and a third driving mode in which the second autonomous driving subsystem controls the vehicle to travel a third distance and then stop, wherein the second distance is greater than the first distance and the third distance.

According to another aspect of the present disclosure, there is provided a monitoring method for a vehicle, wherein the vehicle comprises multiple driving modes, and the monitoring method comprises: generating a control instruction for triggering one of the multiple driving modes of the vehicle, and sending the control instruction to the vehicle for triggering the vehicle to travel according to the one of the multiple driving modes, wherein the vehicle comprises an autonomous driving system, the autonomous driving system comprising a first autonomous driving subsystem and a second autonomous driving subsystem, and the first autonomous driving subsystem and the second autonomous driving subsystem comprising different sensors, wherein the plurality of driving modes comprise at least one of the following driving modes: a first driving mode in which the first autonomous driving subsystem controls the vehicle to travel a first distance and then stop; a second driving mode in which the first autonomous driving subsystem controls the vehicle to travel a second distance and then stop; and a third driving mode in which the second autonomous driving subsystem controls the vehicle to travel a third distance and then stop, wherein the second distance is greater than the first distance and the third distance.

According to another aspect of the present disclosure, there is provided an electronic apparatus, comprising: at least one processor; and a memory communicatively connected to at least one processor; wherein, the memory stores instructions, and wherein the instructions, when executed by at least one processor, cause the at least one processor to execute the method of the present disclosure.

According to another aspect of the present disclosure, there is provided a non-transitory computer-readable storage medium storing computer instructions. The computer instructions are used to cause a computer to execute the method of the present disclosure.

According to one or more embodiments of the present disclosure, the autonomous vehicle is provided with a remote monitoring system for monitoring the autonomous driving state of a vehicle. By using a device to receive the driving information of the autonomous vehicle and image data collected by the autonomous vehicle, the autonomous vehicle can be monitored and provided with the required control instruction to ensure the safe traveling of the autonomous vehicle.

It is to be understood that the content in this section is neither intended to identify key or critical features of the embodiments of the present disclosure, nor to limit the scope of the disclosure. Other features of the present disclosure will become apparent from the following description.

### BRIEF DESCRIPTION OF THE DRAWINGS

The accompanying drawings illustrate the embodiments by way of example and constitute a part of the specification, and together with the written description of the specification serve to explain the exemplary implementation mode of the embodiments. The illustrated embodiments are for illustrative purposes only and do not limit the scope of the claims. Throughout the drawings, the same reference numerals indicate similar, but not necessarily identical, elements.
Fig. 1A shows an exemplary block diagram of a vehicle according to an embodiment of the present disclosure;
Fig. 1B shows an exemplary block diagram of an autonomous driving system of a vehicle according to an embodiment of the present disclosure;
Fig. 2 shows an exemplary block diagram of a monitoring system according to an embodiment of the present disclosure;
Fig. 3 shows an exemplary block diagram of a vehicle according to another embodiment of the present disclosure;
Fig. 4 shows an exemplary flow chart of a monitoring method for a vehicle according to an embodiment of the present disclosure;
Fig. 5 shows an exemplary flow chart of a method executed by a vehicle having multiple driving modes according to an embodiment of the present disclosure;
Fig. 6A shows an exemplary block diagram of a monitoring system according to another embodiment of the present disclosure;
Fig. 6B shows an exemplary block diagram of a monitoring system according to yet another embodiment of the present disclosure;
Fig. 7 shows an example diagram of an instruction trigger panel according to an embodiment of the present disclosure;
Fig. 8 shows a usage process of a monitoring system according to an embodiment of the present disclosure;
Fig. 9 shows a block diagram of a structure of a computing device according to an embodiment of the present disclosure;
Fig. 10 shows a block diagram of a structure of a control device according to an embodiment of the present disclosure.

### DETAILED DESCRIPTION

The following describes exemplary embodiments of the present disclosure in conjunction with the accompanying drawings, which include various details of the embodiments of the present disclosure to facilitate understanding, and should be considered as merely exemplary. Accordingly, one of ordinary skills in the art appreciates that various changes and modifications can be made to the embodiments described herein without departing from the scope of the present disclosure. Also, descriptions of well-known functions and structures are omitted from the following description for clarity and conciseness.

In this disclosure, the use of the terms "first", "second", and the like to describe various elements is not intended to limit the positional, timing sequence, or importance relationships of the elements unless otherwise indicated, and such terms are used solely to distinguish one element from another. In some instances, a first element and a second element may refer to the same instance of the element, and in some cases, they may refer to different instances based on the context.

The term used in the description of the various illustrated examples in this disclosure is for the purpose of describing particular examples only and is not intended to be limiting. Unless the context clearly indicates otherwise, if the number of an element is not expressly defined, the element can be one or more. Furthermore, the term "and/or" as used in this disclosure encompasses any and all possible combinations of the listed items.

An autonomous vehicle can use a pre-configured autonomous driving system to perceive the surrounding environment and combine the perceived environmental information and the current driving state of the vehicle to perform processing to obtain the current appropriate autonomous driving decision. However, if there is a shadow area or an error in the perceived information, or if there is an error or a failure in the decision algorithm configured in the autonomous driving system, it is possible that the autonomous driving system will make an incorrect driving decision to affect the driving safety of the autonomous vehicle.

For the safety of the vehicle, multiple autonomous driving subsystems can be used for redundancy. When an error or a failure occurs in one autonomous driving subsystem controlling the vehicle, other autonomous driving subsystems can be used instead for controlling the vehicle. Applicants note that multiple autonomous driving subsystems on a vehicle may have the same type of defects, resulting in shadow areas or errors in the information perceived by these autonomous driving subsystems. Since this is a defect of the autonomous driving subsystem itself, even setting a certain autonomous driving subsystem remotely from the vehicle may not solve the problem, especially when these autonomous driving subsystems are developed by the same research and development group. Applicants note that in the event of a defect in an autonomous driving subsystem, or an error or a failure in a certain autonomous driving subsystem, generally there always exist some functions or modules of a certain autonomous driving subsystem that can be used normally, even if other functions or modules of the autonomous driving subsystem cannot be used normally. Therefore, it is possible to provide multiple driving modes for the autonomous vehicle, and different driving modes use different functions or modules of the autonomous driving system (or the autonomous driving subsystem). Therefore, in the event of a shadow area or an error in the information perceived by the autonomous driving system (or the autonomous driving subsystem) or an error or a failure in the autonomous driving system (or the autonomous driving subsystem), the autonomous vehicle can be triggered (e.g. triggered by an input from an operator) by a monitoring system remotely provided with respect to the vehicle to enter a certain driving mode (the driving mode uses those functions or modules of the autonomous driving subsystem that can operate normally).

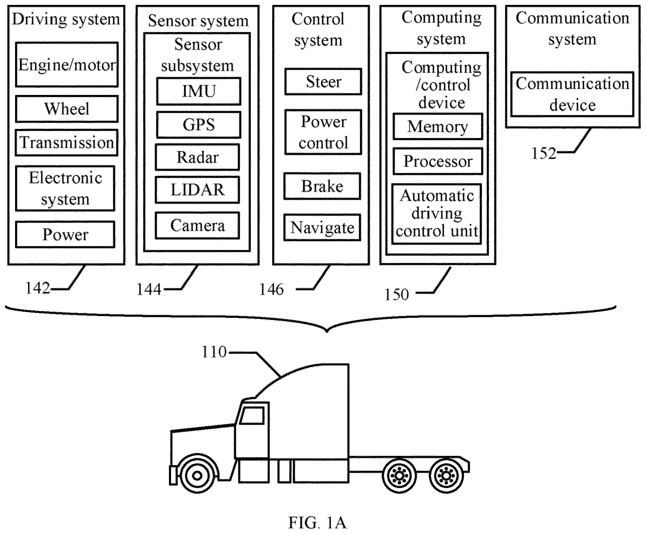

Fig. 1A is a schematic diagram of an exemplary vehicle 110. Although the vehicle 110 is illustrated in Fig. 1A as a truck, those skilled in the art could understand that the vehicle 110 may also be any vehicle or means of transportation such as a car, a bus, etc.

The vehicle 110 may include various vehicle systems such as driving system 142, sensor system 144, control system 146, computing system 150, and communication system 152. The vehicle 110 may include more or fewer systems, and each system may include multiple units. Further, each of the systems and units of the vehicle 110 may be interconnected. For example, computing system 150 can be in data communication with one or more units of the driving system 142, sensor system 144, control system 146, and communication system 152.

The vehicle 110 may include an autonomous driving (also referred to as unmanned driving) system, so that it can be run completely or partially in an autonomous driving mode. In this sense, the vehicle 110 is also called an autonomous vehicle. The vehicle 110 can control itself (or the vehicle is controlled by the autonomous driving system) in the autonomous driving mode. For example, the vehicle 110 can determine the current state of the vehicle and the current state of the environment in which the vehicle is located, determine the predicted behavior of at least one other vehicle in the environment, and determine the trust grade corresponding to the possibility of the at least one other vehicle executing the predicted behavior, and control the vehicle 110 itself based on the determined information. When in autonomous driving mode, the vehicle 110 can run without human interaction. The autonomous driving system of vehicle 110 may include sensor system 144 and computing system 150, for example.

The driving system 142 may include multiple operable components (or units) that provide kinetic energy for the vehicle 110. In one embodiment, the driving system 142 may include an engine or a motor, a wheel, a transmission, an electronic system, and a power (or a source of power).

The sensor system 144 may include multiple sensor subsystems (although only one sensor subsystem is shown in Fig. 1A). Each sensor subsystem includes multiple sensors for sensing information about the environment and condition of the vehicle 110. Each sensor subsystem may include one or more of inertia measurement unit (IMU), global navigation satellite system (GNSS) transceiver (e.g. Global Positioning System (GPS) transceiver), radio detection and ranging device (RADAR), light detection and ranging system (LIDAR), acoustic sensor, ultrasonic sensor, and image capturing device (e.g. a camera). One or more sensors included in each sensor subsystem can be driven individually or collectively to update the position, the direction, or both of the one or more sensors.

In some embodiments, sensor system 144 may include two sensor subsystems for implementing redundancy, where one sensor subsystem is a sensor master system and the other sensor subsystem is the redundancy of the sensor master system, also referred to as sensor slave system.

In some embodiments, in addition to the sensor master system and sensor slave system, the sensor system 144 further includes a sensor backup system as the redundancy for sensor master system and sensor slave system. The sensor slave system may have fewer sensors than the sensor master system, and likewise, the sensor backup system may have fewer sensors than the sensor slave system.

The control system 146 is used to control the operation of the vehicle 110 and components (or units) thereof. Accordingly, the control system 146 may include various units such as a steering unit, power control unit, braking unit, and navigation unit. The steering unit may be a combination of machines that adjust the heading direction of the vehicle 110. The power control unit (which may be a throttle, for example) may, for example, be used to control the operating speed of the engine, which in turn controls the speed of the vehicle 110. The braking unit may include a combination of machines for decelerating the vehicle 110. The braking unit can decelerate the vehicle by using frictional force in a standard manner. The navigation unit may be any system that determines the driving path or route for the vehicle 110. The navigation unit may also dynamically update the driving path as the vehicle 110 advances.

The communication system 152 may include one or more communication devices to provide a way for the vehicle 110 to communicate with one or more apparatuses or other surrounding vehicles. In one exemplary embodiment, each communication device of the communication system 152 may communicate with one or more apparatuses either directly or through a communication network. The communication system 152 may be, for example, a wireless communication system. For example, the communication device of the communication system may use 3G cellular communication (e.g. CDMA, EVDO, GSM/GPRS) or 4G cellular communication (e.g. WiMAX or LTE), and may also use 5G cellular communication. Alternatively, the communication device of the communication system can communicate (e.g. by using WIFI^{®}) with a wireless local area network (WLAN). In some embodiments, the communication device of the communication system 152 may communicate directly with one or more apparatuses or other surrounding vehicles, for example, by using the wireless microwave, infrared ray, Bluetooth ^{®}, or ZIGBEE. In some embodiments, the communication device of the communication system 152 may communicate directly with one or more apparatuses or other surrounding vehicles through an ad-hoc network (mesh network) by using WIFI^{®}, wireless microwave, or cellular communication (e.g. 3G, 4G, or 5G cellular communication). Other wireless protocols, such as various vehicle-mounted communication systems, are also within the scope of the present application. For example, the communication device of the communication system can include one or more dedicated short range communication (DSRC) devices, or V2X devices (such as a V2V device), which will conduct public or private data communication with a vehicle and/or a roadside station.

The computing system 150 may include one or more computing devices (and/or control devices) for controlling some or all functions of the vehicle 110, and each computing device (or control device) includes at least one processor (which may include at least one microprocessor). The processor executes a processing instruction (i.e. machine executable instructions) stored in a non-volatile computer-readable medium (such as a data storage device or memory). In some embodiments, the memory may contain therein processing instructions (e.g. program logic) that is executed by the processor to implement various functions of the vehicle 110. One or more of the computing devices (and/or control device(s)) may include an autonomous driving control unit. The autonomous driving control unit can be used to identify, evaluate, and avoid or cross potential obstacles in the environment in which the vehicle 110 is located. In general, the autonomous driving control unit may be used to control the vehicle 110 when no driver is provided, or to assist the driver in controlling the vehicle. In some embodiments, the autonomous driving control unit is used to combine data from the sensor, such as data from a GPS transceiver, radar data, LIDAR data, camera data, and data from other vehicle systems to determine the traveling path or trajectory of the vehicle 110. The autonomous driving control unit may be activated to enable the vehicle 110 to be driven in the autonomous driving mode.

In some embodiments, the computing system 150 includes at least two computing devices, one of which receives the data of the sensor master system (the corresponding computing device is also called the master computing device), and the other computing device acts as the redundancy of the master computing device to receive data from the sensor slave system (the corresponding computing device is also called slave computing device). In some embodiments, in addition to the master computing device and slave computing device, as the redundancy, the computing system 150 further includes a backup computing device, which receives data from a sensor backup system. The master computing device, slave computing device, and backup computing device may have the same computing resources or may have different computing resources, e.g. the slave computing device may have fewer computing resources than the master computing device and the backup computing device has fewer computing resources than the slave computing device.

In some embodiments, each computing device of the computing system 150 may be a computer or a server, and the control device of the computing system 150 may be a vehicle control unit (VCU) or like controllers.

Although the autonomous driving control unit in Fig. 1A is shown to be separated from the processor and the memory, it should be understood that in some implementation modes, some or all functions of the autonomous driving control unit can be implemented by using program code instructions residing in one or more memories (or data storage devices) and executed by one or more processor. In addition, an autonomous driving control unit can be realized by using the same processor and/or memory (or data storage device) in some cases. In some implementation modes, the autonomous driving control unit can be implemented at least partially by using various dedicated circuit logics, various processors, various field-programmable gate arrays ("FPGA"), various application-specific integrated circuits ("ASIC"), various real-time controllers and hardware.

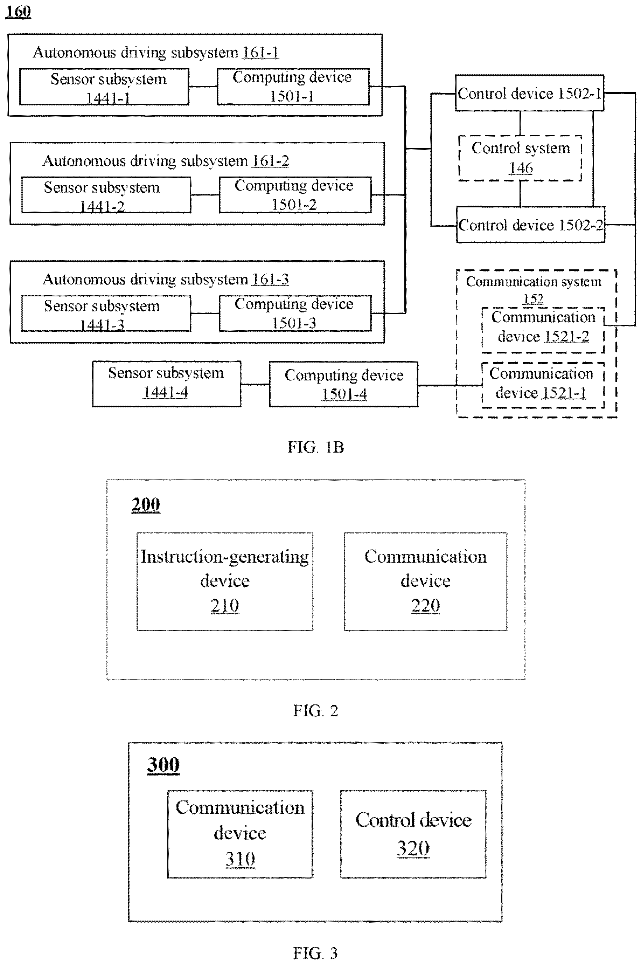

Fig. 1B shows an exemplary block diagram of an autonomous driving system of a vehicle 110 according to various embodiments. For ease of illustration, portions of the autonomous driving system of the vehicle 110 in Fig. 1B are represented by solid boxes, and other portions of the vehicle 110 are represented by dashed boxes. As shown in FIG. 1B, the autonomous driving system 160 of the vehicle 110 includes multiple autonomous driving subsystems that constitute the redundancy, e.g. the autonomous driving subsystem 161-1 as the master autonomous driving system, the autonomous driving subsystem 161-2 as the slave autonomous driving system, and/or the autonomous driving subsystem 161-3 as the backup autonomous driving system. The master autonomous driving system includes at least sensor subsystem 1441-1 as the sensor master system and computing device 1501-1 as the master computing device, the slave autonomous driving system includes at least sensor subsystem 1441-2 as the sensor slave system and computing device 1501-2 as the slave computing device, and the backup autonomous driving system includes at least sensor subsystem 1441-3 as sensor backup system and computing device 1501-3 as the backup computing device. The autonomous driving system 160 of the vehicle 110 also includes one or more control devices.

As shown in FIG. 1B, the master autonomous driving system, slave autonomous driving system, and backup autonomous driving system are all connected to a control device, and then to other systems of the vehicle (e.g. control system 146 and communication system 152) through the control device. That is, an instruction from the master autonomous driving system, slave autonomous driving system and backup autonomous driving system to the control system will be sent to the control device first, and then forwarded by the control device to the control system. In normal operation of the master autonomous driving system, the control device forward the instruction of the master autonomous driving system to the control system, but not forward the instructions of the slave autonomous driving system and backup autonomous driving system to the control system. In this case, the traveling and stopping of the vehicle are controlled by the master autonomous driving system. If the control device determines that the master autonomous driving system has a fault, and according to the nature or degree of the fault, determines that the master autonomous driving system cannot achieve the safety requirements of the vehicle, and the slave autonomous driving system works normally, then the control device no longer forwards the instruction of the master autonomous driving system to the control system, but forwards the instruction of the slave autonomous driving system to the control system. At this time, the traveling and stopping of the vehicle are controlled by the slave autonomous driving system. Similarly, if the control device determines that both the master autonomous driving system and slave autonomous driving system have failed, and according to the nature or degree of the failure, determines that both the master and slave autonomous driving systems cannot meet the safety requirements of the vehicle, then the control device no longer forwards the instructions of the master and slave autonomous driving systems to the control system, but forwards the instruction of the backup autonomous driving system to the control system. At this time, the traveling and stopping of the vehicle are controlled by the backup autonomous driving system.

In addition to forwarding instructions from each autonomous driving subsystem to the control system 146, the control device of the autonomous driving system can also forward data from each autonomous driving subsystem (such as vehicle information received from each autonomous driving subsystem) to the communication system 152. In some embodiments, the control device can also execute instructions from each autonomous driving subsystem or communication system (for example, an instruction received from a monitoring system through the communication system), and control the autonomous driving subsystem and/or control system according to an execution result of the instruction.

In the case where the autonomous driving system 160 includes multiple control devices, at least two control devices may constitute a redundancy. For example, as shown in FIG. 1B, the autonomous driving system 160 includes a control device 1502-1 and a control device 1502-2, where one control device may serve as a redundancy for another control device. The control device 1502-1 and control device 1502-2 can have the same structure and communicate with each other. Both the control device 1502-1 and control device 1502-2 are connected with each autonomous driving subsystem, control system, and communication system.

One of the control device 1502-1 and control device 1502-2 can be the master control device, and the other is the slave control device. When the master control device works normally, the slave control device will not forward any data or instruction to other devices or systems, nor will it control any other devices or systems, that is, all functions of the control device of the autonomous driving system described above are executed by the master control device. When the master control device fails (for example, the slave control device determines that the master control device has failed by the data received from the master control device), the slave control device substitutes for the master control device to execute all functions which should have been executed by the master control device. The failed master control device can be changed as a slave control device or stop working.

The autonomous driving system 160 may also include sensor subsystem 1441-4 and computing device 1501-4. Among them, the sensor subsystem 1441-4 can collect environmental data around the vehicle 110. An image-capturing device (e.g. camera) in the sensor subsystem 1441-4 can collect the environment image around the vehicle 110. One or more sensors (e.g. image capturing device) in the sensor subsystem 1441-4 may be installed at the windshield location of the vehicle 110 to collect environmental data in front of the vehicle from the driver's perspective. The computing device 1501-4 may be a computer or a server for processing environmental data collected by the sensor subsystem 1441-4. As shown in Fig. 1B, communication system 152 is connected to autonomous driving system 160. The communication system 152 can include communication device 1521-1 and communication device 1521-2, which are connected to computing device 1501-4 and the control device respectively for data transmission of the computing device 1501-4 and the control device.

Although Fig. 1A and Fig. 1B show various components (or units) integrated into the vehicle 110, one or more of these components (or units) can be carried by the vehicle 110 or independently associated with the vehicle 110. For example, the computing system can exist partially or completely independently from the vehicle 110. Therefore, the vehicle 110 can exist as a separate or integrated apparatus unit. The apparatus units constituting the vehicle 110 can communicate with each other by wired communication or wireless communication. In some embodiments, additional components or units can be added to each system, or one or more components or units (for example, LiDAR or a radar shown in Fig. 1A) can be removed from the system.

Fig. 2 shows an exemplary block diagram of a monitoring system according to an embodiment of the present disclosure. The monitoring system can be used to control and monitor a vehicle (such as the vehicle 110 in Fig. 1A), which can include multiple driving modes. As shown in Fig. 2, monitoring system 200 includes instruction-generating device 210 and communication device 220.

The instruction-generating device 210 is configured to generate a control instruction for triggering one driving mode of multiple driving modes of a vehicle (e.g. autonomous vehicle). The communication device 220 is configured to send a control instruction to the vehicle for triggering the vehicle to travel according to the one driving mode of the plurality of driving modes.

With one or more of the embodiments provided by the present disclosure, a monitoring system for remote use may be provided for a traveling vehicle (e.g. autonomous vehicle in the autonomous driving process) to control the driving mode of the vehicle as needed. By sending the control instruction to the vehicle by using the communication device, the vehicle can be monitored and provided with the required control instruction to ensure safe traveling of the vehicle. By setting the monitoring system as a remote device independent from the vehicle, the flexible monitoring of the autonomous vehicle can be achieved without setting a safety supervisor on each autonomous vehicle to achieve the monitoring function.

In some embodiments, communication device 220 can also be configured to receive at least one of the vehicle information (such as vehicle traveling state data and autonomous driving system data) of the vehicle and the environmental information around the vehicle collected by a sensor on the vehicle through at least one communication link established with the vehicle. The autonomous driving system data includes the working state of the sensors of the autonomous driving system, the grade state of the autonomous driving system (for example, which subsystem of the autonomous driving system controls the traveling and stopping of the vehicle), the position data generated by the autonomous driving system, the perception data generated by the autonomous driving system, and the decision data generated by the autonomous driving system. Vehicle traveling state data can include vehicle traveling speed and vehicle acceleration. The perception data generated by the autonomous driving system can include objects in the field of view of the sensors which are recognized by the autonomous driving system.

In some embodiments, the vehicle information received by the communication device may include at least one of the following: the traveling speed of the vehicle, the acceleration of the vehicle, the working state of the sensors (e.g. sensors of the vehicle autonomous driving system) of the vehicle, the grade state of the autonomous driving system, position data generated by the autonomous driving system, perception data generated by the autonomous driving system, and decision data generated by the autonomous driving system. Among them, the above vehicle information can reflect the driving state of the vehicle in the autonomous driving process. The environmental information may include environmental information around the vehicle sensed by the sensors (e.g. the sensors of one or more sensor subsystems of the sensor subsystem 1441-1, the sensor subsystem 1441-2, the sensor subsystem 1441-3, and the sensor subsystem 1441-4 shown in FIG. 1B) installed on the vehicle. In some embodiments, to reduce the amount of data transmission, the communication device 220 receives only the environmental information around the vehicle sensed by the sensor subsystem 1441-4 of the vehicle and does not receive the environmental information around the vehicle sensed by other sensor subsystems (e.g. sensor subsystem 1441-1, sensor subsystem 1441-2, and sensor subsystem 1441-3).

In some examples, the computing device and/or control device (such as one or more of computing device 1501-1, the computing device 1501-2, the computing device 1501-3, and the computing device 1501-4 shown in Fig. 1B) of the autonomous driving system in the vehicle are used to perform compressing, encoding, encrypting, and other operations on the environmental information data (such as image data) and/or vehicle information data, and send the processed data to the monitoring system through the communication link. The monitoring system can perform decrypting, decoding, and other operations on the received data. Using the information and data received from the vehicle, the monitoring system can discover the risks present during vehicle traveling.

In some embodiments, at least one communication link established between the monitoring system and the vehicle can include multiple communication links with different reliabilities and latencies. For example, the communication link between the monitoring system and the vehicle may comprise at least one of a cellular mobile communication link (such as a 4G/5G link), a V2X communication link, and a wireless microwave communication link. Among them, the cellular mobile communication link (such as a 4G/5G link) can be used to establish a communication link with high reliability and high latency, the V2X communication link can be used to establish a communication link with high reliability and low latency, and the wireless microwave communication link can be used to establish a communication link with low reliability and low latency. The cellular mobile communication link and V2X communication link can be used to transmit vehicle information and control instruction. The cellular mobile communication link and the V2X communication link are mutually redundant. If one of the cellular mobile communication link and the V2X communication link fails, the other can be used to transmit corresponding information or data. The wireless microwave communication link can be used to build a communication link with low reliability and low latency. By sacrificing data transmission latency and reliability, it can allow the transmission of large amounts of data (such as environmental information). In addition, in the case where the amount of data of the environmental information to be transmitted is not large, the transmission of the environmental information can also be realized by using the cellular mobile communication link and the V2X communication link.

In some embodiments, the instruction-generating device 210 may be configured to generate a control instruction for triggering one driving mode of the multiple driving modes of the vehicle in response to the received at least one of the vehicle information and the environmental information. For example, information received from the vehicle may be processed by using a pre-configured algorithm to identify risks and generate a control instruction for triggering a driving mode capable of evading the identified risks.

In some embodiments, the instruction-generating device 210 may be configured to generate a control instruction for triggering one driving mode of multiple driving modes of the vehicle in response to user input (e.g. user input via an instruction trigger panel). A risk existing in the autonomous driving process may be determined by a user at the monitoring system (e.g. a safety supervisor) based on information received from the vehicle, and a control instruction for triggering a driving mode capable of evading the identified risk may be generated. In some implementation modes, the monitoring system may also include a display device. The display device may be configured to display at least one of the vehicle information and environmental information to the user such that the user provides an input to the monitoring system according to the displayed at least one piece of information.

Multiple driving modes of the vehicle include at least one of the following driving modes: a first driving mode in which the first autonomous driving subsystem controls the vehicle to travel the first distance and then stop (for example, controlling the vehicle to stop immediately); a second driving mode in which the first autonomous driving subsystem controls the vehicle to travel the second distance and then stop (for example, controlling the vehicle to pull over); and a third driving mode in which the second autonomous driving subsystem controls the vehicle to travel the third distance and then stop (for example, controlling the vehicle to stop immediately). The second distance is greater than the first distance and the third distance. The second autonomous driving subsystem may be the slave autonomous driving system or backup autonomous driving system when the first autonomous driving subsystem is the master autonomous driving system as described above, and the second autonomous driving subsystem may be the backup autonomous driving system when the first autonomous driving subsystem is the slave autonomous driving system as described above. For example, when the control instruction includes an instruction for triggering the first driving mode described above, the autonomous vehicle may be controlled to immediately stop by using the master autonomous driving system. When the control instruction comprises an instruction for triggering the second driving mode, the autonomous vehicle may be controlled to pull over by using the master autonomous driving system. When the control instruction includes an instruction for triggering the above-mentioned third driving mode, it is possible to control the autonomous vehicle to use the instruction of the slave autonomous driving system or backup autonomous driving system to pull over. Similarly, the control instruction may also include an instruction for controlling the autonomous vehicle to immediately stop by using the slave autonomous driving system, an instruction for controlling the autonomous vehicle to immediately stop by using the backup autonomous driving system, etc.

In some embodiments, communication device 220 can also be configured to send the control instruction to the vehicle for controlling the traveling of the autonomous vehicle. The autonomous vehicle can receive the control instruction sent by the monitoring system and verify the validity of the received instruction. After the verification is passed, the command corresponding to the control instruction can be executed to ensure the traveling safety of the autonomous vehicle.

The monitoring system shown in Fig. 2 may be arranged in other positions independent from the autonomous vehicle. For example, the monitoring system may be arranged on another vehicle, or the monitoring system may be arranged in a remote control center. When the monitoring system is arranged at a remote control center, the monitoring system may be configured such that the monitoring system is capable of receiving information sent by multiple autonomous vehicles and monitoring multiple autonomous vehicles simultaneously. When the monitoring system is arranged on another vehicle, it is possible to monitor the traveling state of an autonomous vehicle traveling in the vicinity with the monitoring system in a one-to-one manner. Since the monitoring system implementing the monitoring function is arranged independently from the autonomous vehicle, the flexible scheduling of the monitoring system can be achieved. For example, the monitoring system may be scheduled according to conditions such as road conditions, environmental conditions (information such as weather), etc. or in response to a request of the autonomous vehicle. As one example, in case of detecting poor road conditions (such as the occurrence of accidents, congestions, etc.) and poor weather conditions (such as heavy fog, rain and snow, etc.), a vehicle arranged with a monitoring system in the vicinity may be scheduled to a corresponding region to monitor an autonomous vehicle of the region. As another example, a monitoring request may be initiated proactively by the autonomous vehicle when the autonomous vehicle fails. Upon detecting a request initiated by the autonomous vehicle, the vehicle arranged with a monitoring system may go to the location where the autonomous vehicle is located and may take over the traveling decision of the autonomous vehicle, or the safety supervisor checks the autonomous vehicle to solve the fault.

In some embodiments, the monitoring system may further include a positioning device (not shown in the figure). When the monitoring system is arranged on another vehicle different from the autonomous vehicle, the positioning device may be configured to acquire the distance between the monitoring system and the autonomous vehicle to indicate whether the distance between the monitoring system and the autonomous vehicle exceeds the communication distance of the communication link. In some embodiments, position sensors installed at the autonomous vehicle and monitoring system can be used to acquire the position information of the autonomous vehicle and/or monitoring system relative to the global coordinate system to determine the distance between the monitoring system and the autonomous vehicle. With the above-described method, it can be ensured that the distance between the autonomous vehicle and the monitoring system for monitoring the traveling state of the autonomous vehicle satisfies the requirement of the communication distance of the communication link between the monitoring system and the autonomous vehicle capable of data transmission. In some examples, the distance between the autonomous vehicle and the monitoring system can be controlled to be 10-1000m. In other examples, the distance between the autonomous vehicle and the monitoring system may be controlled to be any suitable value as long as the data transmission requirement of the communication link can be met.

Fig. 3 shows an exemplary block diagram of a partial structure of a vehicle 300 according to an embodiment of the present disclosure. The vehicle 300 may be, for example, the vehicle 110 shown in fig. 1A.

As shown in Fig. 3, the vehicle 300 includes a communication device 310 and a control device 320. The communication device 310 may be, for example, the communication device 1521-1 and/or communication device 1521-2 in FIG. 1B, and the control device 320 may be, for example, the control device in FIG. 1B, such as one of control device 1502-1 and control device 1502-2 (i.e. master control device). The communication device 310 may, for example, establish a communication link with the communication device 220 of the monitoring system 200 for the communication between the vehicle 300 and the monitoring system 200.

The communication device 310 is configured to receive a control instruction from the monitoring system 200. The control instruction is used to trigger the vehicle to travel according to one driving mode of multiple driving modes. The control device 320 is configured to control the vehicle to enter one driving mode of multiple driving modes according to the control instruction.

The communication device 310 can also be configured to send at least one of the vehicle information of the vehicle and the environmental information around the vehicle collected by at least one sensor to the monitoring system 200 provided remotely relative to the vehicle for generating the above control instruction. Among them, the above vehicle information can reflect the driving state of the vehicle in the autonomous driving process.

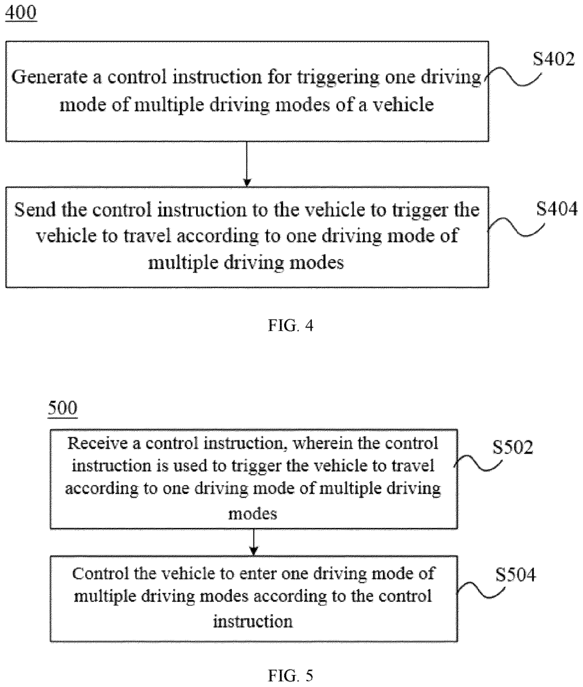

Fig. 4 shows an exemplary flow chart of a monitoring method for a vehicle according to an embodiment of the present disclosure. The method 400 shown in Fig. 4 may be executed by using the monitoring system described in conjunction with Fig. 2. The monitored vehicle comprises multiple driving modes.

As shown in Fig. 4, in step S402, a control instruction for triggering one driving mode of multiple driving modes of a vehicle is generated. In step S404, the control instruction is sent to the vehicle to trigger the vehicle to travel according to one driving mode of multiple driving modes.

In some embodiments, the method 400 can also include receiving at least one of the vehicle information of the vehicle and environmental information around the vehicle collected by sensors on the vehicle through at least one communication link established with the vehicle.

In some embodiments, generating a control instruction for triggering one driving mode of multiple driving modes of a vehicle can include: generating a control instruction for triggering one driving mode of multiple driving modes of a vehicle in response to at least one of the vehicle information and environmental information.

In some embodiments, generating a control instruction for triggering one driving mode of multiple driving modes of a vehicle can include: generating a control instruction for triggering one driving mode of multiple driving modes of a vehicle in response to a user's input (such as an input via an instruction trigger panel).

In some embodiments, the method 400 can also include: displaying at least one of the vehicle information and the environmental information to the user so that the user provides the input to the monitoring system according to at least one piece of information.

Fig. 5 shows an exemplary flow chart of a method executed by a vehicle having multiple driving modes according to an embodiment of the present disclosure. The method 500 shown in Fig. 5 may be executed by the vehicle 110 shown in Fig. 1A or the vehicle 300 shown in Fig. 3.

As shown in Fig. 5, in step S502, a control instruction is received, in which the control instruction is used to trigger the vehicle to travel according to one driving mode of multiple driving modes. In step S504, the vehicle is controlled to enter one driving mode of multiple driving modes according to the above control instruction.

In some embodiments, the method 500 can also include sending at least one of the vehicle information of the vehicle and the environmental information around the vehicle collected by at least one sensor to a monitoring system remotely provided relative to the vehicle for generating the above control instruction.

In some embodiments, the vehicle may include an autonomous driving system. The autonomous driving system may include a first autonomous driving subsystem and a second autonomous driving subsystem, and the first autonomous driving subsystem and the second autonomous driving subsystem include different sensors.

In some embodiments, multiple driving modes can include at least one of the following driving modes: the first driving mode, in which the first autonomous driving subsystem controls the vehicle to travel the first distance and then stop; the second driving mode in which the first autonomous driving subsystem controls the vehicle to travel the second distance and then stop, wherein the second distance is greater than the first distance; and the third driving mode in which the second autonomous driving subsystem controls the vehicle to travel the third distance and then stop.

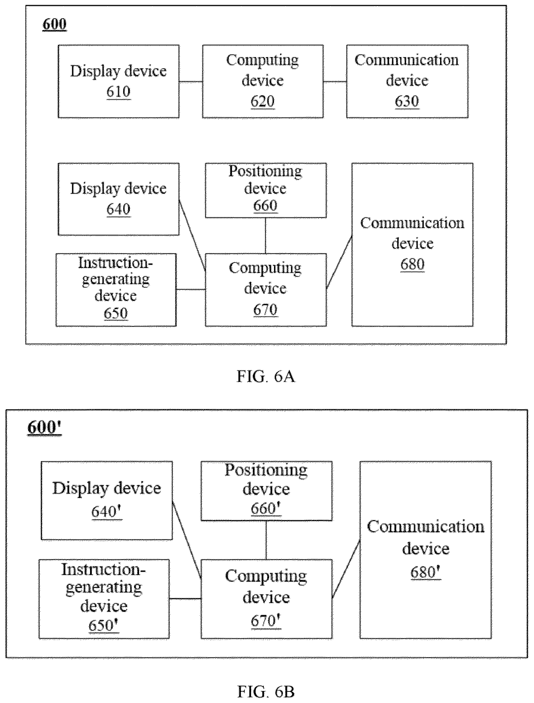

Fig. 6A shows an exemplary block diagram of monitoring system 600 according to an embodiment of the present disclosure. The monitoring system 600 may implement, for example, the monitoring system 200 in Fig. 2. As shown in Fig. 6A, the monitoring system 600 may include the interconnected display device 610, computing device 620, and communication device 630, and may further include the interconnected display device 640, instruction-generating device 650, positioning device 660, computing device 670, and communication device 680. The instruction-generating device 650 shown in Fig. 6A may implement the instruction-generating device 210 shown in Fig. 2, and the communication device 630 and/or communication device 680 shown in Fig. 6A may implement the communication device 220 shown in Fig. 2.

The display device 610 may be used to display environmental information around a monitored vehicle received from the vehicle (e.g. an autonomous vehicle), such as image data from the perspective of a driver of the vehicle. The communication device 630 may be used to receive environmental information (e.g. image data) from the vehicle, and computing device 620 may perform appropriate processing (e.g. decoding, etc.) on the received environmental information and control the display device 610 for display.

The display device 640 may be used to display the vehicle information of the vehicle received from the monitored vehicle, such as at least one of the following: the traveling speed of the vehicle, the acceleration of the vehicle, the working state of the sensors (e.g. sensors of the autonomous driving system of the vehicle) of the vehicle, the grade state of the autonomous driving system, position data generated by the autonomous driving system, perception data generated by the autonomous driving system, and decision data generated by the autonomous driving system. The vehicle information can be received from the vehicle by using communication device 680.

The communication device 630 and communication device 680 may each communicate with one or more apparatuses either directly or through a communication network. The communication device 630 and communication device 680 may each use 3G cellular communication (e.g. CDMA, EVDO, GSM/GPRS) or 4G cellular communication (e.g. WiMAX or LTE), and may also use 5G cellular communication. Alternatively, the communication device 630 and communication device 680 may each communicate (e.g. By using WIFI^{®}) with a wireless local area network (WLAN). In some embodiments, communication device 630 and communication device 680 may each communicate directly with one or more apparatuses or other surrounding vehicles, for example, by using the wireless microwave, infrared ray, Bluetooth ^{®}, or ZIGBEE. In some embodiments, communication device 630 and communication device 680 may each communicate directly with one or more apparatuses or other surrounding vehicles by using WIFI^{®}, wireless microwave, or cellular communication (e.g. 3G, 4G, or 5G cellular communication) through mesh networks (mesh network). Other wireless protocols, such as various vehicle-mounted communication systems, are also within the scope of the present application. For example, communication device 630 and communication device 680 may each include one or more dedicated short-range communication (DSRC) devices, or V2X devices, that may conduct public or private data communication with a vehicle and/or a roadside station.

In some embodiments, the communication device 630 can be a wireless microwave communication device, or any other communication device capable of transmitting large amounts of data, and the communication device 680 can be a cellular mobile communication device and/or V2X communication device for V2X communication link, or any other communication devices capable of transmitting vehicle information data.

In some embodiments, the display device 610 and display device 640 may each be, for example, a plasma display, a liquid crystal display (LCD), a touch screen display, a head-wearing display, or other similar displays.

The instruction-generating device 650 may include a control unit, which is used to generate a control instruction for triggering one driving mode of multiple driving modes of the vehicle.

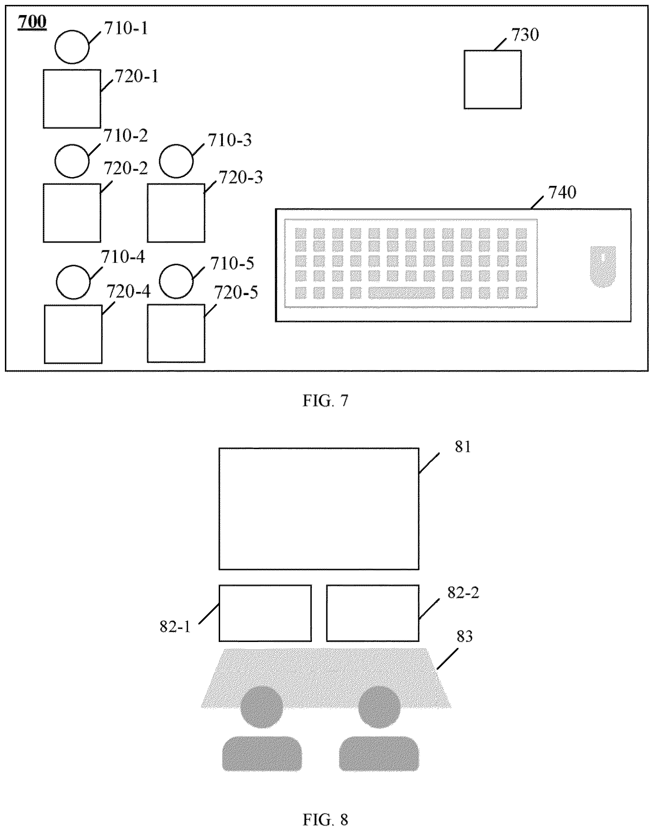

In some embodiments, the instruction-generating device 650 includes an instruction trigger panel connected to the control unit in addition to the control unit. The safety supervisor at the monitoring system can generate the above control instruction by operating the instruction trigger panel (see Fig. 7).

The positioning device 660 may be a global navigation satellite system (GNSS) transceiver (e.g., global positioning system (GPS) transceiver). The positioning device 660 can be used to determine the location of the monitoring system 600. When the monitoring system is provided on another monitoring vehicle different from the monitored vehicle, the distance between the monitoring vehicle and the monitored vehicle can be determined through a result generated by the positioning device 660, so as to ensure that the distance between the monitoring system and the monitored vehicle does not exceed a threshold value of the distance of the communication link that can normally transmit data.

The computing device 670 can be used to process vehicle information received through communication device 680 and the positioning data generated by a positioning device for displaying by the display device.

The computing device 670 can also be used to process the control instruction generated by the instruction-generating device 650 and send the processed control instruction to the communication device 680 which then sends the same to the monitored vehicle for controlling the driving mode of the vehicle. In some examples, the computing device 670 may encrypt the control instruction generated by the instruction-generating device 650 to generate an encrypted control instruction to secure the communication security of the data transmission. In other examples, the computing device 670 may also add a timestamp to each control instruction generated by the instruction-generating device 650 to indicate the generation time and validity time of the control instruction. When the vehicle receives a control instruction with a timestamp, it can determine the real-time and security of the control instruction based on the generation time and validity time of each control instruction. For example, when an elapsed time from the generation time of one control instruction exceeds the validity time of the control instruction, the control instruction can be considered invalid, and the control instruction can be abandoned.

In some embodiments, the instruction-generating device 650 may be connected directly to the communication device 680 without going through the computing device 670. At this time, various processing of the control instruction by the computing device 670 described above may be executed by the instruction-generating device 650.

Fig. 6B shows an exemplary block diagram of a monitoring system 600' according to another embodiment of the present disclosure. The display device 640', instruction-generating device 650', positioning device 660', computing device 670' and communication device 680' shown in Fig. 6B have the functions of the display device 640, instruction-generating device 650, positioning device 660, computing device 670 and communication device 680 shown in Fig. 6A, respectively. In addition to this, the display device 640', computing device 670', and communication device 680' shown in Fig. 6B also have the functions of the display device 610, computing device 620, and communication device 630 shown in Fig. 6A, respectively.

Fig. 7 shows an example diagram of instruction trigger panel 700 according to an embodiment of the present disclosure. As shown in Fig. 7, the instruction trigger panel 700 may include indicator light 710-1~710-5, switch button 720-1~720-5, and power source switch 730. Each switch button corresponds to one driving mode of an autonomous vehicle. A control unit of an instruction-generating device can generate a control instruction according to a trigger signal of the switch button. Among them, the indicator light 710-1~710-5 may be LED light or OLED light. By displaying the lights in different colors, it can indicate whether the driving mode corresponding to the switch button corresponding to the indicator light is available. For example, a red light may indicate that the corresponding driving mode is not available and a green light may indicate that the corresponding driving mode is available. The switch button may be implemented by a button or a key and may be used to trigger a corresponding control instruction to be sent to the autonomous vehicle.

In some embodiments, these switch buttons can respectively correspond to: an instruction (namely, an instruction 1) for controlling the autonomous vehicle to enter the driving mode which uses the master autonomous driving system to pull over the vehicle; an instruction (namely, an instruction 2) for controlling the autonomous vehicle to enter the driving mode which uses the master autonomous driving system to immediately stop the vehicle; an instruction (namely, an instruction 3) for controlling the autonomous vehicle to enter the driving mode which uses the slave autonomous driving system to pull over the vehicle; an instruction (namely, an instruction 4) for controlling the autonomous vehicle to enter the driving mode which uses the slave autonomous driving system to immediately stop the vehicle; and an instruction (namely, an instruction 5) for controlling the autonomous vehicle to enter the driving mode which uses the backup autonomous driving system to immediately stop the vehicle. The setting of the above-mentioned switch buttons is only one possible example, and a person skilled in the art could set the specific content of the control instruction triggered by the switch button according to actual situations. The power source switch 730 can be used for control panel startup. Further, the instruction trigger panel 700 may also include an input apparatus 740, such as a mouse, a keyboard, etc. In some examples, the instruction trigger panel 700 may also include an indicator light for indicating the state of the communication between the monitoring system and the autonomous vehicle, thereby enabling the operator of the monitoring system to quickly learn about the current state of the communication between the monitoring system and the autonomous vehicle. If the current communication state is poor, the communication state can be improved by adjusting the distance between the monitoring vehicle and the autonomous vehicle.

For example, when the traveling and stopping of the vehicle are controlled by the master autonomous driving system (at this time, the corresponding indicator light would indicate that a relevant driving mode of the master autonomous driving system is available), and if the operator notices that an image from the perspective of a driver includes an object that is not recognized by the autonomous driving system, and the object is far away from the vehicle, the operator can trigger the instruction 1 by operating the corresponding switch button; and if the object is close to the vehicle, the operator can trigger the instruction 2 by operating the corresponding switch button. When the traveling and stopping of the vehicle are controlled by the slave autonomous driving system (at this time, the corresponding indicator light would indicate that a relevant driving mode of the slave autonomous driving system is available), and if the operator notices that an image from the perspective of a driver includes an object that is not recognized by the autonomous driving system, and the object is far away from the vehicle, the operator can trigger the instruction 3 by operating the corresponding switch button; and if the object is close to the vehicle, the operator can trigger the instruction 4 by the corresponding switch button. When the traveling and stopping of the vehicle are controlled by the backup autonomous driving system (at which time the corresponding indicator light will indicate that a relevant driving mode of the backup autonomous driving system is available), and if the operator notices that an image from the perspective of a driver includes an object that is not recognized by the autonomous driving system, the operator can trigger the instruction 5 through the corresponding switch button.

Fig. 8 shows a using process of a monitoring system (e.g. the monitoring system 600 shown in Fig. 6A or the monitoring system 600' shown in Fig. 6B) according to an embodiment of the present disclosure. As shown in Fig. 8, the monitoring system includes a display device 81, a display device 82-1, a display device 82-2, and an instruction-generating device 83. The display device 81 can be used to display the data of an image from the perspective of a driver collected by an image acquisition device of an autonomous vehicle. The display device 82-1 may be used to display the distance and wireless communication state information between the monitoring vehicle and the autonomous vehicle. The display device 82-2 may be used to display vehicle traveling state data and autonomous driving system data (e.g. perception data generated by the autonomous driving system) sent by the autonomous vehicle. The display device 81 may be the display device 610 shown in Fig. 6A, the display device 82-1 and the display device 82-2 may be the display device 640 shown in Fig. 6A, and the instruction-generating device 83 may be the instruction-generating device 650 shown in Fig. 6A.

According to an embodiment of the present disclosure, there is also provided an electronic apparatus comprising: at least one processor; and a memory communicatively connected to at least one processor, wherein the memory stores instructions that, when executed by at least one processor, cause the at least one processor to execute the monitoring method of the present disclosure. The electronic apparatus may include the instruction trigger panel described in connection with Fig. 7 as an input device.

According to an embodiment of the present disclosure, there is also provided an electronic apparatus comprising: at least one processor; and a memory communicatively connected to at least one processor, wherein the memory stores instructions that, when executed by at least one processor, cause the at least one processor to execute the method executed by a vehicle having multiple driving modes according to the present disclosure.

There is also provided, according to an embodiment of the present disclosure, a non-transitory computer-readable storage medium storing computer instructions. The computer instructions are used to cause a computer to execute the method of the present disclosure.

There is also provided, according to an embodiment of the present disclosure, a computer program product including a computer program, wherein the computer program, when executed by a processor, implements the method of the present disclosure.

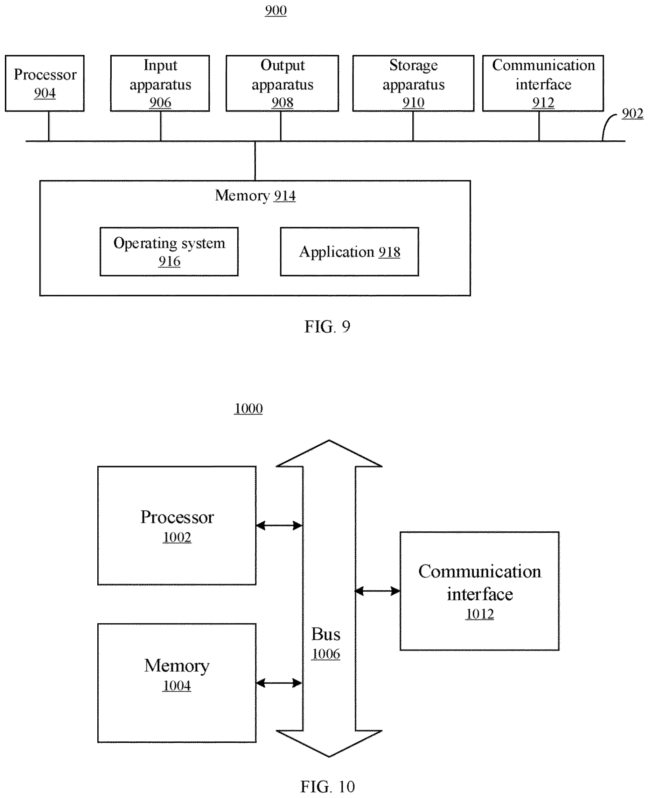

Fig. 9 shows an exemplary computing device 900 that may be used, for example, to implement computing device 620 and computing device 670 shown in Fig. 6A and computing device 670' shown in Fig. 6B. In some embodiments, the computing device 900 may also be used to implement the computing device in an autonomous vehicle as shown in Figs. 1A and 1B.

The computing device 900 may be any machine configured to execute processing and/or computing, and may be, but is not limited to, a workstation, a server, a desktop computer, a laptop computer, a tablet computer, a personal digital assistant, a smart phone, a vehicle-mounted computer, or any combination thereof.

The computing device 900 may include elements that are connected to or in communication with a bus 902 (possibly via one or more interfaces). For example, the computing device 900 may include the bus 902, one or more processors 904, one or more input apparatuses 906, and one or more output apparatuses 908. The one or more processors 904 may be any type of processor and may include, but is not limited to, one or more general-purpose processors and/or one or more special-purpose processors (e.g. special handling chip). The input apparatus 906 may be any type of apparatus capable of inputting information to the computing device 900, and may include, but is not limited to, a mouse, a keyboard, a touch screen, a microphone, and/or a remote control. The output apparatus 908 may be any type of apparatus capable of presenting information and may include, but is not limited to, a display, a loudspeaker, a video/audio output terminal, a vibrator, and/or a printer. The computing device 900 may also include or be connected to a non-transitory storage apparatus 910. The non-transitory storage apparatus may be any storage apparatus that is non-transitory and may enable data storage, and the non-transitory storage apparatus may include, but is not limited to, a magnetic disk driver, an optical storage apparatus, a solid state storage, a floppy disk, a flexible disk, a hard disk, a magnetic tape or any other magnetic media, an optical disk or any other optical media, ROM (read-only memory), RAM (random access memory), cache memory and/or any other storage chips or cartridges, and/or any other media from which a computer can read data, an instruction and/or a code. The non-transitory storage apparatus 910 is detachable from an interface. The non-transitory storage apparatus 910 may have data/program (including an instruction)/code for implementing the above method and steps. The computing device 900 may also include a communication interface 912. The communication interface 912 may be any type of apparatus or system that enables the computing device 900 to communicate with other devices and/or with a network. The communication interface 912 may include, but is not limited to, modems, network cards, infrared communication apparatus, wireless communication apparatus, and/or chipsets such as Bluetooth^{™} apparatus, 802.11 apparatus, WiFi apparatus, WiMax apparatus, cellular communication apparatus, and/or the like.

The computing device 900 can also include a memory 914, which is any type of storage that can store programs (including an instruction) and/or data useful for the work of a processor 904, and can include but is not limited to random access memory and/or read-only memory apparatus.

A software (program) can be located in the memory 914, including but not limited to an operating system 916, one or more application programs 918, a driver program, and/or other data and codes. An instruction for executing some methods and steps of the present disclosure may be included in one or more application programs 918. An executable code or source code of an instruction of software (program) may be stored in a non-transitory computer-readable storage medium (such as the storage apparatus 910 described above) and, upon execution, may be stored in the memory 914 (possibly compiled and/or installed). An executable code or source code of an instruction of software (program) may also be downloaded from a remote position.

Fig. 10 shows an exemplary control device 1000 that may be used, for example, to implement the control unit in instruction-generating device 210 shown in Fig. 2, the control unit in instruction-generating device 650 shown in Fig. 6A, and the control unit in instruction-generating device 650' shown in Fig. 6B.

The control device 1000 may include elements that are connected to or in communication with a bus 1006 (possibly via one or more interfaces). For example, the control device 1000 may include the bus 1006 and one or more processors 1002. The one or more processors 1002 may be any type of processor and may include, but is not limited to, one or more general purpose processors and/or one or more special-purpose processors (e.g. special handling chip). The control device 1000 may also include a communication interface 1012. The communication interface 1012 may be any type of apparatus or system that enables the control device 1000 to communicate with other devices and/or with a network. The communication interface 1012 may include, but is not limited to, modems, network cards, infrared communication apparatus, wireless communication apparatus, and/or chipsets such as Bluetooth^{™} apparatus, 802.11 apparatus, WiFi apparatus, WiMax apparatus, cellular communication apparatus, and/or the like.

The control device 1000 can also include a memory 1004, which can be any type of memory that stores programs (including an instruction) and/or data useful for the work of a processor 1002, and can include but is not limited to random access memory and/or read-only memory.

A software (program) can be located in the memory 1004, including but not limited to an operating system, one or more application programs, a driver program, and/or other data and codes. An instruction for executing some methods and steps of the present disclosure may be included in one or more application programs.

## Claims

1. A monitoring system (200) for a vehicle, wherein the vehicle comprises a plurality of driving modes, and the monitoring system comprises:
an instruction-generating device (210) configured to generate a control instruction for triggering one of the plurality of driving modes of the vehicle, and
a communication device (220) configured to send the control instruction to the vehicle for triggering the vehicle to travel according to the one of the plurality of driving modes,
wherein the vehicle comprises an autonomous driving system, the monitoring system (200) being **characterised in** the autonomous driving system comprising a first autonomous driving subsystem and a second autonomous driving subsystem, and the first autonomous driving subsystem and the second autonomous driving subsystem comprising different sensors,
wherein the plurality of driving modes comprise the following driving modes:
a first driving mode in which the first autonomous driving subsystem controls the vehicle to travel a first distance and then stop;
a second driving mode in which the first autonomous driving subsystem controls the vehicle to travel a second distance and then stop; and
a third driving mode in which the second autonomous driving subsystem controls the vehicle to travel a third distance and then stop,
wherein the second distance is greater than the first distance and the third distance.

2. The monitoring system according to claim 1, wherein the communication device (220) is further configured to receive at least one of vehicle information of the vehicle and environmental information around the vehicle collected by a sensor of the vehicle through at least one communication link established between the monitoring system and the vehicle.

3. The monitoring system according to claim 2, wherein the instruction-generating device (210) is configured to generate the control instruction for triggering the one of the plurality of driving modes of the vehicle in response to at least one of the vehicle information and the environmental information.

4. The monitoring system according to claim 2 or 3, wherein the vehicle information comprises at least one of:
a traveling speed of the vehicle, an acceleration of the vehicle, a working state of the sensor of the vehicle, a grade state of an autonomous driving system of the vehicle, position data generated by the autonomous driving system, perception data generated by the autonomous driving system, and decision data generated by the autonomous driving system.

5. The monitoring system according to claim 1, wherein the instruction-generating device (210) is configured to generate the control instruction for triggering the one of the plurality of driving modes of the vehicle in response to an input of a user.

6. The monitoring system according to claim 5, further comprising a display device, wherein the display device is configured to display at least one of vehicle information and environmental information to the user such that the user provides the input to the monitoring system according to the at least one of the vehicle information and the environmental information.

7. A vehicle (300) having a plurality of driving modes, comprising:
a communication device (310) configured to receive a control instruction, wherein the control instruction is used to trigger the vehicle to travel according to one of the plurality of driving modes,
a control device (320) configured to control the vehicle to enter the one of the plurality of driving modes according to the control instruction,
the vehicle (300) being **characterised in that** it further comprises:
a first autonomous driving subsystem, and
a second autonomous driving subsystem, the first autonomous driving subsystem and the second autonomous driving subsystem comprising different sensors,
wherein the plurality of driving modes comprise the following driving modes:
a first driving mode in which the first autonomous driving subsystem controls the vehicle to travel a first distance and then stop;
a second driving mode in which the first autonomous driving subsystem controls the vehicle to travel a second distance and then stop; and
a third driving mode in which the second autonomous driving subsystem controls the vehicle to travel a third distance and then stop,
wherein the second distance is greater than the first distance and the third distance.

8. The vehicle according to claim 7, wherein the communication device (310) is further configured to:
transmit vehicle information of the vehicle through a cellular mobile communication link or aV2X communication link established between the vehicle and a monitoring system, and
transmit environmental information around the vehicle collected by a sensor of the vehicle through a wireless microwave communication link established between the vehicle and the monitoring system.

9. The vehicle according to claim 8, wherein the communication device (310) is further configured to:
receive the control instruction through the cellular mobile communication link or theV2X communication link established between the vehicle and the monitoring system.

10. A monitoring method (400) for a vehicle, wherein the vehicle comprises a plurality of driving modes, and the monitoring method comprises:
generating (S402) a control instruction for triggering one of the plurality of driving modes of the vehicle, and
sending (S404) the control instruction to the vehicle for triggering the vehicle to travel according to the one of the plurality of driving modes,
wherein the vehicle comprises an autonomous driving system, the method (400) being **characterised in** the autonomous driving system comprising a first autonomous driving subsystem and a second autonomous driving subsystem, and the first autonomous driving subsystem and the second autonomous driving subsystem comprising different sensors,
wherein the plurality of driving modes comprise the following driving modes:
a first driving mode in which the first autonomous driving subsystem controls the vehicle to travel a first distance and then stop;
a second driving mode in which the first autonomous driving subsystem controls the vehicle to travel a second distance and then stop; and
a third driving mode in which the second autonomous driving subsystem controls the vehicle to travel a third distance and then stop,
wherein the second distance is greater than the first distance and the third distance.

11. The monitoring method according to claim 10, further comprising:
receiving at least one of vehicle information of the vehicle and environmental information around the vehicle collected by a sensor of the vehicle through at least one communication link established with the vehicle.

12. The monitoring method according to claim 11, wherein generating (S402) the control instruction for triggering the one of the plurality of driving modes of the vehicle comprises:
generating the control instruction for triggering the one of the plurality of driving modes of the vehicle in response to at least one of the vehicle information and the environmental information.

13. The monitoring method according to claim 10, wherein generating (S402) the control instruction for triggering the one of the plurality of driving modes of the vehicle comprises:
generating the control instruction for triggering the one of the plurality of driving modes of the vehicle in response to an input of a user.

14. An electronic apparatus, comprising:
at least one processor; and
at least one memory, the memory storing instructions, wherein the instructions, when executed by the at least one processor, cause the at least one processor to execute the method of any one of claims 10-13.

15. A computer-readable storage medium storing computer instructions, wherein the computer instructions, when executed by a processor of a computer, cause the computer to execute the method of any one of claims 10-13.

## Patentansprüche

1. Ein Überwachungssystem (200) für ein Fahrzeug, wobei das Fahrzeug eine Vielzahl von Fahrmodi beinhaltet, und das Überwachungssystem beinhaltet:
eine anweisungserzeugende Einrichtung (210), die dazu konfiguriert ist, eine Steueranweisung zum Auslösen eines der Vielzahl von Fahrmodi des Fahrzeugs zu erzeugen, und
eine Kommunikationseinrichtung (220), die dazu konfiguriert ist, die Steueranweisung an das Fahrzeug zu senden, um auszulösen, dass das Fahrzeug gemäß dem einen der Vielzahl von Fahrmodi fährt,
wobei das Fahrzeug ein System für autonomes Fahren beinhaltet, und das Überwachungssystem (200) **dadurch gekennzeichnet ist, dass** das System für autonomes Fahren ein erstes Untersystem für autonomes Fahren und ein zweites Untersystem für autonomes Fahren beinhaltet, und das erste Untersystem für autonomes Fahren und das zweite Untersystem für autonomes Fahren verschiedene Sensoren beinhalten,
wobei die Vielzahl von Fahrmodi die folgenden Fahrmodi beinhalten:
einen ersten Fahrmodus, in dem das erste Untersystem für autonomes Fahren das Fahrzeug derart steuert, dass es eine erste Strecke fährt und dann anhält;
einen zweiten Fahrmodus, in dem das erste Untersystem für autonomes Fahren das Fahrzeug derart steuert, dass es eine zweite Strecke fährt und dann anhält; und
einen dritten Fahrmodus, in dem das zweite Untersystem für autonomes Fahren das Fahrzeug derart steuert, dass es eine dritte Strecke fährt und dann anhält,
wobei die zweite Strecke größer als die erste Strecke und die dritte Strecke ist.

2. Überwachungssystem nach Anspruch 1, wobei die Kommunikationseinrichtung (220) ferner dazu konfiguriert ist, Fahrzeuginformationen des Fahrzeugs und/oder Umweltinformationen der Umgebung des Fahrzeugs, die durch einen Sensor des Fahrzeugs erfasst wurden, über mindestens eine zwischen dem Überwachungssystem und dem Fahrzeug hergestellte Kommunikationsverbindung zu empfangen.

3. Überwachungssystem nach Anspruch 2, wobei die anweisungserzeugende Einrichtung (210) dazu konfiguriert ist, die Steueranweisung zum Auslösen des einen der Vielzahl von Fahrmodi des Fahrzeugs als Reaktion auf die Fahrzeuginformationen und/oder die Umweltinformationen zu erzeugen.

4. Überwachungssystem nach Anspruch 2 oder 3, wobei die Fahrzeuginformationen beinhalten:
eine Fahrtgeschwindigkeit des Fahrzeugs, eine Beschleunigung des Fahrzeugs, einen Betriebszustand des Sensors des Fahrzeugs, einen Gradzustand eines Systems für autonomes Fahren des Fahrzeugs, von dem System für autonomes Fahren erzeugte Positionsdaten, von dem System für autonomes Fahren erzeugte Wahrnehmungsdaten und/oder von dem System für autonomes Fahren erzeugte Entscheidungsdaten.

5. Überwachungssystem nach Anspruch 1, wobei die anweisungserzeugende Einrichtung (210) dazu konfiguriert ist, die Steueranweisung zum Auslösen des einen der Vielzahl von Fahrmodi des Fahrzeugs als Reaktion auf eine Eingabe eines Benutzers zu erzeugen.

6. Überwachungssystem nach Anspruch 5, ferner beinhaltend eine Anzeigeeinrichtung, wobei die Anzeigeeinrichtung dazu konfiguriert ist, dem Benutzer Fahrzeuginformationen und/oder Umweltinformationen derart anzuzeigen, dass der Benutzer die Eingabe an das Überwachungssystem gemäß der Fahrzeuginformationen und/oder der Umweltinformationen vornimmt.

7. Ein Fahrzeug (300) mit einer Vielzahl von Fahrmodi, beinhaltend:
eine Kommunikationseinrichtung (310), die dazu konfiguriert ist, eine Steueranweisung zu empfangen, wobei die Steueranweisung dazu verwendet wird, auszulösen, dass das Fahrzeug gemäß einem der Vielzahl von Fahrmodi fährt,
eine Steuereinrichtung (320), die dazu konfiguriert ist, das Fahrzeug zu steuern, sodass es gemäß der Steueranweisung in den einen der mehreren Fahrmodi eintritt,
das Fahrzeug (300) **dadurch gekennzeichnet ist, dass** es ferner beinhaltet:
ein erstes Untersystem für autonomes Fahren und
ein zweites Untersystem für autonomes Fahren, wobei das erste Untersystem für autonomes Fahren und das zweite Untersystem für autonomes Fahren verschiedene Sensoren beinhalten, wobei die Vielzahl von Fahrmodi die folgenden Fahrmodi beinhalten:
einen ersten Fahrmodus, in dem das erste Untersystem für autonomes Fahren das Fahrzeug derart steuert, dass es eine erste Strecke fährt und dann anhält;
einen zweiten Fahrmodus, in dem das erste Untersystem für autonomes Fahren das Fahrzeug derart steuert, dass es eine zweite Strecke fährt und dann anhält; und
einen dritten Fahrmodus, in dem das zweite Untersystem für autonomes Fahren das Fahrzeug derart steuert, dass es eine dritte Strecke fährt und dann anhält,
wobei die zweite Strecke größer als die erste Strecke und die dritte Strecke ist.

8. Fahrzeug nach Anspruch 7, wobei die Kommunikationseinrichtung (310) ferner dazu konfiguriert ist:
Fahrzeuginformationen des Fahrzeugs über eine Mobilfunk-Kommunikationsverbindung oder eine V2X-Kommunikationsverbindung, die zwischen dem Fahrzeug und einem Überwachungssystem hergestellt wurde, zu übertragen und
Umweltinformationen der Umgebung des Fahrzeugs, die von einem Sensor des Fahrzeugs erfasst wurden, über eine drahtlose Mikrowellen-Kommunikationsverbindung, die zwischen dem Fahrzeug und dem Überwachungssystem hergestellt wurde, zu übertragen.

9. Fahrzeug nach Anspruch 8, wobei die Kommunikationseinrichtung (310) ferner dazu konfiguriert ist:
die Steueranweisung über die Mobilfunk-Kommunikationsverbindung oder die V2X-Kommunikationsverbindung zu empfangen, die zwischen dem Fahrzeug und dem Überwachungssystem hergestellt wurde.

10. Ein Überwachungsverfahren (400) für ein Fahrzeug, wobei das Fahrzeug eine Vielzahl von Fahrmodi beinhaltet und das Überwachungsverfahren beinhaltet:
Erzeugen (S402) einer Steueranweisung zum Auslösen eines der Vielzahl von Fahrmodi des Fahrzeugs, und
Senden (S404) der Steueranweisung an das Fahrzeug, um auszulösen, dass das Fahrzeug gemäß dem einen der Vielzahl von Fahrmodi fährt,
wobei das Fahrzeug ein System für autonomes Fahren beinhaltet, und das Verfahren (400) **dadurch gekennzeichnet ist, dass** das System für autonomes Fahren ein erstes Untersystem für autonomes Fahren und ein zweites Untersystem für autonomes Fahren beinhaltet und das erste Untersystem für autonomes Fahren und das zweite Untersystem für autonomes Fahren verschiedene Sensoren beinhalten,
wobei die Vielzahl von Fahrmodi die folgenden Fahrmodi beinhalten:
einen ersten Fahrmodus, in dem das erste Untersystem für autonomes Fahren das Fahrzeug derart steuert, dass es eine erste Strecke fährt und dann anhält;
einen zweiten Fahrmodus, in dem das erste Untersystem für autonomes Fahren das Fahrzeug derart steuert, dass es eine zweite Strecke fährt und dann anhält; und
einen dritten Fahrmodus, in dem das zweite Untersystem für autonomes Fahren das Fahrzeug derart steuert, dass es eine dritte Strecke fährt und dann anhält,
wobei die zweite Strecke größer als die erste Strecke und die dritte Strecke ist.

11. Überwachungsverfahren nach Anspruch 10, ferner beinhaltend:
Empfangen von Fahrzeuginformationen des Fahrzeugs und/oder Umweltinformationen der Umgebung des Fahrzeugs, die durch einen Sensor des Fahrzeugs erfasst wurden, über mindestens eine mit dem Fahrzeug hergestellte Kommunikationsverbindung.

12. Überwachungsverfahren nach Anspruch 11, wobei das Erzeugen (S402) der Steueranweisung zum Auslösen des einen der Vielzahl von Fahrmodi des Fahrzeugs beinhaltet:
Erzeugen der Steueranweisung zum Auslösen des einen der Vielzahl von Fahrmodi des Fahrzeugs als Reaktion auf die Fahrzeuginformationen und/oder die Umweltinformationen.

13. Überwachungsverfahren nach Anspruch 10, wobei das Erzeugen (S402) der Steueranweisung zum Auslösen des einen der Vielzahl von Fahrmodi des Fahrzeugs beinhaltet:
Erzeugen der Steueranweisung zum Auslösen des einen der Vielzahl von Fahrmodi des Fahrzeugs als Reaktion auf eine Eingabe eines Benutzers.

14. Eine elektronische Vorrichtung, beinhaltend:
mindestens einen Prozessor; und
mindestens einen Speicher, wobei in dem Speicher Anweisungen gespeichert sind, wobei die Anweisungen, wenn sie von dem mindestens einen Prozessor ausgeführt werden, den mindestens einen Prozessor dazu veranlassen, das Verfahren gemäß einem der Ansprüche 10-13 auszuführen.

15. Ein computerlesbares Speichermedium, auf dem Computeranweisungen gespeichert sind, wobei die Computeranweisungen, wenn sie von einem Prozessor eines Computers ausgeführt werden, den Computer dazu veranlassen, das Verfahren gemäß einem der Ansprüche 10-13 auszuführen.

## Revendications

1. Un système de surveillance (200) pour un véhicule, dans lequel le véhicule comprend une pluralité de modes de conduite, et le système de surveillance comprend :
un dispositif de génération d'instruction (210) configuré pour générer une instruction de commande pour le déclenchement d'un de la pluralité de modes de conduite du véhicule, et un dispositif de communication (220) configuré pour envoyer l'instruction de commande au véhicule pour le déclenchement du véhicule pour qu'il se déplace selon l'un de la pluralité de modes de conduite,
dans lequel le véhicule comprend un système de conduite autonome, le système de surveillance (200) étant **caractérisé en ce que** le système de conduite autonome comprend un premier sous-système de conduite autonome et un deuxième sous-système de conduite autonome, et le premier sous-système de conduite autonome et le deuxième sous-système de conduite autonome comprenant différents capteurs,
dans lequel la pluralité de modes de conduite comprend les modes de conduite suivants :
un premier mode de conduite dans lequel le premier sous-système de conduite autonome commande le véhicule pour qu'il se déplace sur une première distance puis s'arrête ;
un deuxième mode de conduite dans lequel le premier sous-système de conduite autonome commande le véhicule pour qu'il se déplace sur une deuxième distance puis s'arrête ; et
un troisième mode de conduite dans lequel le deuxième sous-système de conduite autonome commande le véhicule pour qu'il se déplace sur une troisième distance puis s'arrête,
dans lequel la deuxième distance est supérieure à la première distance et à la troisième distance.

2. Le système de surveillance selon la revendication 1, dans lequel le dispositif de communication (220) est en outre configuré pour recevoir des informations de véhicule du véhicule et/ou des informations environnementales autour du véhicule collectées par un capteur du véhicule au moyen d'au moins une liaison de communication établie entre le système de surveillance et le véhicule.

3. Le système de surveillance selon la revendication 2, dans lequel le dispositif de génération d'instruction (210) est configuré pour générer l'instruction de commande pour le déclenchement de l'un de la pluralité de modes de conduite du véhicule en réponse aux informations de véhicule et/ou aux informations environnementales.

4. Le système de surveillance selon la revendication 2 ou 3, dans lequel les informations de véhicule comprennent au moins l'un des éléments suivants :
une vitesse de déplacement du véhicule, une accélération du véhicule, un état de fonctionnement du capteur du véhicule, un état de catégorie d'un système de conduite autonome du véhicule, des données de position générées par le système de conduite autonome, des données de perception générées par le système de conduite autonome, et des données de décision générées par le système de conduite autonome.

5. Le système de surveillance selon la revendication 1, dans lequel le dispositif de génération d'instruction (210) est configuré pour générer l'instruction de commande pour le déclenchement de l'un de la pluralité de modes de conduite du véhicule en réponse à une entrée d'un utilisateur.

6. Le système de surveillance selon la revendication 5, comprenant en outre un dispositif d'affichage, dans lequel le dispositif d'affichage est configuré pour afficher des informations de véhicule et/ou des informations environnementales à l'utilisateur de telle sorte que l'utilisateur fournisse l'entrée au système de surveillance selon les informations de véhicule et/ou les informations environnementales.

7. Un véhicule (300) ayant une pluralité de modes de conduite, comprenant :
un dispositif de communication (310) configuré pour recevoir une instruction de commande, dans lequel l'instruction de commande est utilisée pour déclencher le véhicule pour qu'il se déplace selon l'un de la pluralité de modes de conduite,
un dispositif de commande (320) configuré pour commander le véhicule pour qu'il entre dans l'un de la pluralité de modes de conduite selon l'instruction de commande,
le véhicule (300) étant **caractérisé en ce qu'**il comprend en outre :
un premier sous-système de conduite autonome, et
un deuxième sous-système de conduite autonome, le premier sous-système de conduite autonome et le deuxième sous-système de conduite autonome comprenant différents capteurs,
dans lequel la pluralité de modes de conduite comprend les modes de conduite suivants :
un premier mode de conduite dans lequel le premier sous-système de conduite autonome commande le véhicule pour qu'il se déplace sur une première distance puis s'arrête ;
un deuxième mode de conduite dans lequel le premier sous-système de conduite autonome commande le véhicule pour qu'il se déplace sur une deuxième distance puis s'arrête ; et
un troisième mode de conduite dans lequel le deuxième sous-système de conduite autonome commande le véhicule pour qu'il se déplace sur une troisième distance puis s'arrête,
dans lequel la deuxième distance est supérieure à la première distance et à la troisième distance.

8. Le véhicule selon la revendication 7, dans lequel le dispositif de communication (310) est en outre configuré pour :
transmettre des informations de véhicule du véhicule au moyen d'une liaison de communication mobile cellulaire ou d'une liaison de communication V2X établie entre le véhicule et un système de surveillance, et
transmettre des informations environnementales autour du véhicule collectées par un capteur du véhicule au moyen d'une liaison de communication micro-ondes sans fil établie entre le véhicule et le système de surveillance.

9. Le véhicule selon la revendication 8, dans lequel le dispositif de communication (310) est en outre configuré pour :
recevoir l'instruction de commande au moyen de la liaison de communication mobile cellulaire ou de la liaison de communication V2X établie entre le véhicule et un système de surveillance.

10. Un procédé de surveillance (400) pour un véhicule, dans lequel le véhicule comprend une pluralité de modes de conduite, et le procédé de surveillance comprend :
la génération (S402) d'une instruction de commande pour le déclenchement d'un de la pluralité de modes de conduite du véhicule, et
l'envoi (S404) de l'instruction de commande au véhicule pour le déclenchement du véhicule pour qu'il se déplace selon l'un de la pluralité de modes de conduite,
dans lequel le véhicule comprend un système de conduite autonome, le procédé (400) étant **caractérisé en ce que** le système de conduite autonome comprend un premier sous-système de conduite autonome et un deuxième sous-système de conduite autonome, et le premier sous-système de conduite autonome et le deuxième sous-système de conduite autonome comprenant différents capteurs,
dans lequel la pluralité de modes de conduite comprend les modes de conduite suivants :
un premier mode de conduite dans lequel le premier sous-système de conduite autonome commande le véhicule pour qu'il se déplace sur une première distance puis s'arrête ;
un deuxième mode de conduite dans lequel le premier sous-système de conduite autonome commande le véhicule pour qu'il se déplace sur une deuxième distance puis s'arrête ; et
un troisième mode de conduite dans lequel le deuxième sous-système de conduite autonome commande le véhicule pour qu'il se déplace sur une troisième distance puis s'arrête,
dans lequel la deuxième distance est supérieure à la première distance et à la troisième distance.

11. Le procédé de surveillance selon la revendication 10, comprenant en outre :
la réception des informations de véhicule du véhicule et/ou des informations environnementales autour du véhicule collectées par un capteur du véhicule au moyen d'au moins une liaison de communication établie avec le véhicule.

12. Le procédé de surveillance selon la revendication 11, dans lequel la génération (S402) de l'instruction de commande pour le déclenchement de l'un de la pluralité de modes de conduite du véhicule comprend :
la génération de l'instruction de commande pour le déclenchement de l'un de la pluralité de modes de conduite du véhicule en réponse aux informations de véhicule et/ou aux informations environnementales.

13. Le procédé de surveillance selon la revendication 10, dans lequel la génération (S402) de l'instruction de commande pour le déclenchement de l'un de la pluralité de modes de conduite du véhicule comprend :
la génération de l'instruction de commande pour le déclenchement de l'un de la pluralité de modes de conduite du véhicule en réponse à une entrée d'un utilisateur.

14. Un appareil électronique, comprenant :
au moins un processeur ; et
au moins une mémoire, la mémoire stockant des instructions, dans lequel les instructions, lorsqu'elles sont exécutées par l'au moins un processeur, amènent l'au moins un processeur à exécuter le procédé selon l'une quelconque des revendications 10 à 13.

15. Un support de stockage lisible par ordinateur stockant des instructions d'ordinateur, dans lequel les instructions informatiques, lorsqu'elles sont exécutées par un processeur d'un ordinateur, amènent l'ordinateur à exécuter le procédé selon l'une quelconque des revendications 10 à 13.
